# EUROPEAN PATENT APPLICATION

(11) **EP 2 502 769 A1**
(43) Date of publication of application: **26.09.2012**
(21) Application number: 10831418.8
(22) Date of filing: 21.10.2010
(51) Int. Cl.: B60J 3/00

(54) **SHADE DEVICE**

(30) Priority: 18.11.2009 JP 2009262739
(71) Applicant: Ashimori Industry Co., Ltd., Osaka-shi Osaka 550-0014 (JP)
(72) Inventor: OYA, Takeaki, Settsu-shi Osaka 566-0001 (JP); YASUDA, Soshi, Settsu-shi Osaka 566-0001 (JP)
(74) Representative: Wilhelms · Kilian & Partner Patentanwälte
(86) International application number: PCT/JP2010/068579
(87) International publication number: WO 2011/062022

(57) **Abstract**

Included are: a shade; a housing member to which the shade is mounted so as to be extended/housed through an opening; a lid body disposed in the housing member so as to open/close the opening and configured to rotate about a rotation axis of a shaft portion between an opened position and a closed position along with an extending/housing movement of the shade; and a spring member configured to bias the lid body in a rotation direction. The spring member is disposed so as to change a direction of a biasing force along with a rotary movement of the lid body so that a rotational biasing force in an opening direction is exerted on the lid body in a state in which the lid body is opened and that a rotational biasing force in a closing direction is exerted on the lid body in a state in which the lid body is closed.

## Description

### Technical Field

The present invention relates to a shade device that shields a window.

### Background Art

Patent Document 1 discloses the sunshade device as the technology of shielding a window. The sunshade device of Patent Document 1 includes a shading screen that shields a window from light and a housing portion that houses the shading screen, in which a drawing port for drawing out the shading screen is provided in the housing portion and an opening/closing lid that opens/closes the drawing port is mounted thereto. This opening/closing lid is rotatably mounted about a mounting shaft and is configured to open/close the drawing port through the rotation movement thereof. Further, the sunshade device is provided with a leaf spring body that holds the opening/closing lid at an opening location or closing location. This leaf spring body elastically abuts against abutment portions of a cum surface of the opening/closing lid about the mounting shaft, to thereby hold the opening/closing lid at the opening location or closing location.

### Prior Art Document

### Patent Document

Patent Document 1: Japanese Patent Application No. 2004-306904

### Summary of the Invention

### Problem to be Solved by the Invention

Unfortunately, the leaf spring body of Patent Document 1 includes two bending portions and is flexed in an up-and-down direction between the cum surface and itself, to thereby obtain the spring force required for pressing the distal end thereof against the cum surface. That is, the leaf spring body is configured to, also in the state in which the opening/closing lid is located at the opening location or closing location, hold the opening/closing lid at the opening location or closing location through the action of a biasing force in the same direction (up-and-down direction). In this manner, in Patent Document 1, the opening/closing lid is not rotationally biased in the opening direction at the opening location or in the closing direction at the closing location. This may cause the opening/closing lid to rattle at the opening location or closing location due to vibrations produced when, for example, a vehicle runs or a door is opened/closed.

Therefore, an object of the present invention is to hold a lid body of a housing member more stably in an opened position or closed position.

### Means to Solve the Problem

A shade device according to a first aspect includes: a shade; a housing member to which the shade is mounted so as to be extended/housed through an opening; a lid body disposed in the housing member so as to open/close the opening and configured to rotate about a rotation axis between an opened position and a closed position along with an extending/housing movement of the shade; and a spring member configured to bias the lid body in a rotation direction, wherein the spring member is disposed so as to change a direction of a biasing force along with a rotary movement of the lid body so that a rotational biasing force in an opening direction is exerted on the lid body in a state in which the lid body is opened and that a rotational biasing force in a closing direction is exerted on the lid body in a state in which the lid body is closed.

According to a second aspect, in the shade device according to the first aspect: the lid body includes a rocking portion formed in a part thereof around the rotation axis; and the spring member has one end coupled to the housing member and the other end coupled to the rocking portion in a state in which the biasing force is exerted in an approaching/departing direction of the one end and the other end, and is configured to change the direction of the rotational biasing force exerted on the lid body every time the other end secured to the rocking portion crosses a line connecting the one end and the rotation axis of the lid body along with the rotary movement of the lid body.

According to a third aspect, the shade device according to the first or second aspect further includes a stay attached to an extension-side edge of the shade, wherein the lid body includes a first abutment portion configured to abut against a distal end of the stay when the shade is extended and a second abutment portion configured to abut against a pivotal end of the stay when the shade is housed.

According to a fourth aspect, in the shade device according to the third aspect, the first abutment portion is disposed so as to be disposed on a movement path of the stay until the rotational biasing force of the spring member in the opening direction is exerted on the lid body; and the second abutment portion is disposed so as to be located on the movement path of the stay until the rotational biasing force of the spring member in the closing direction is exerted on the lid body.

According to a fifth aspect, in the shade device according to any one of the second to fourth aspects, the housing portion includes a guide member guiding the rocking portion formed in a part of the lid body around the rotation axis.

According to a sixth aspect, the shade device according to any one of the third to fifth aspects further includes an abutment member coupled to the stay attached to the extension-side edge of the shade and configured to abut against the lid body toward the closing direction by the biasing force for housing the shade by the housing member.

According to a seventh aspect, in the shade device according to the sixth aspect, the abutment member includes a pressure portion configured to press the lid body in the closed position toward the closing direction by the biasing force for housing the shade by the housing member.

### Effects of the Invention

According to the shade device of the first aspect, the spring member is disposed so as to change the direction of the biasing force along with the rotary movement of the lid body caused by the extending/housing movement of the shade, and is configured to rotationally bias the lid body in an opening direction in the state in which the lid body is opened and rotationally bias the lid body in a closing direction in the state in which the lid body is closed. This enables to hold the lid body of the housing member in the opened position or closed position more stably.

According to the shade device of the second aspect, the direction of the rotational biasing force exerted on the lid body changes every time the other end of the spring member secured to the rocking portion crosses the line connecting one end of the spring member and the rotation axis of the lid body. That is, the lid body is rotated along with the extending/housing movement of the shade, and is rotationally biased toward the opening direction or closing direction to the state in which the position is changed from the opened position to the closed position, from the position at which the rotational biasing force of the spring member changes. This allows the lid body to change the position thereof to the opened position or closed position more reliably. When the shade is extended, the shade can be extended smoothly without interference of the shade with the lid body.

According to the shade device of the third aspect, the lid body starts rotation upon the stay directly abutting against the first abutment portion and the second abutment portion when the shade is extended/housed, which stabilizes the initial movement of the lid body.

According to the shade device of the fourth aspect, the first abutment portion is disposed on the movement path of the stay until the spring member exerts the rotational biasing force on the lid body in the opening direction when the shade is extended. Meanwhile, the second abutment portion is configured to be disposed on the movement path of the stay until the spring member exerts the rotational biasing force on the lid body in the closing direction when the shade is housed. This enables to open or close the lid body more reliably.

According to the shade device of the fifth aspect, the sliding movement of the rocking portion is regulated by the guide portion, whereby the biasing force of the spring member can be stably exerted on the lid body in the rotation direction. This allows to open/close the lid body more stably.

According to the shade device of the sixth aspect, the abutment member abuts against the lid body toward the closing direction when the shade is housed, which allows a position change of the lid body to the closed position more reliably.

According to the shade device of the seventh aspect, the pressure portion of the handle member abuts against the lid body toward the closing direction in the state in which the lid body is closed, which suppresses rattling of the lid body in the closed position more reliably.

### Brief Description of Drawings

FIG. 1 is a room-side perspective view of a shade device in a state in which a shade is housed.
FIG. 2 is a room-side perspective view of the shade device in a state in which the shade is extended.
FIG. 3 is a cross-sectional view of the shade device in the state in which the shade is housed.
FIG. 4 is a cross-sectional view of the shade device in the state in which the shade is extended.
FIG. 5 is a side view of the shade device.
FIG. 6 shows the relationship between a lid body in a closed position and a spring member.
FIG. 7 shows the relationship between the lid body in an opened position and the spring member.
FIG. 8 is a cross-sectional view showing a state in which a stay abuts against a first abutment portion.
FIG. 9 is a cross-sectional view showing a state in which the stay abuts against a second abutment portion.
FIG. 10 is a cross-sectional view showing a state in which a handle portion abuts against the lid body.

### Embodiment for Carrying Out the Invention

Hereinafter, a shade device according to an embodiment is described. The shade device is a device for shielding a window of a vehicle such as a car from light by means of a shade.

### <1. Configuration of shade device>

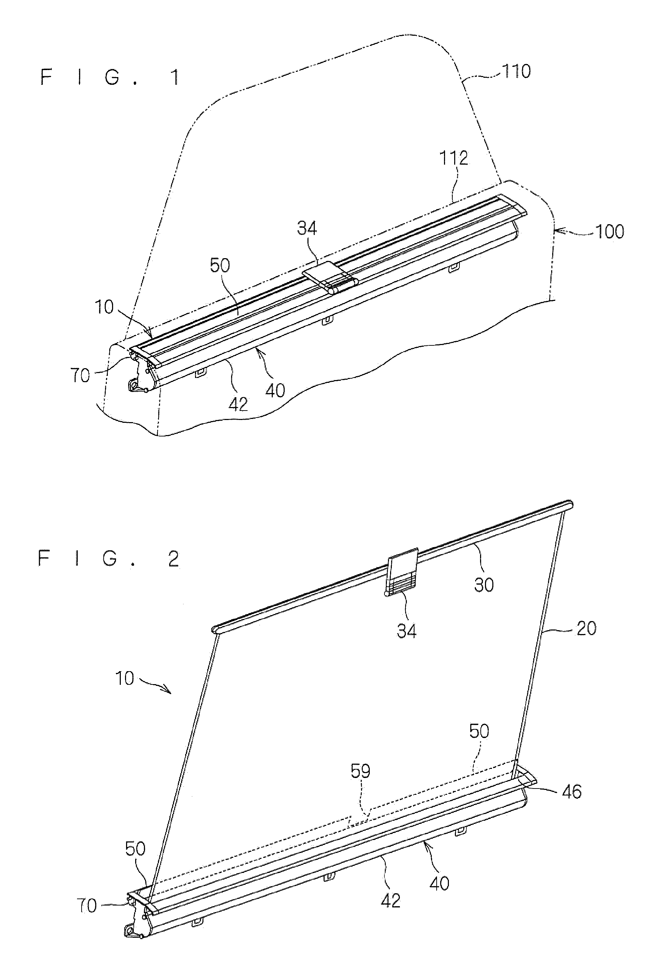

First, the configuration of a shade device 10 is described (see FIG. 1 and FIG. 2).

The shade device 10 is disposed in a resin panel (such as a trim) of a floor-side interior of a window so as to shade the light entering from a window 110 of a rear door 100 (door of a rear seat) of a car. FIG. 1 shows an example in which the shade device 10 is disposed in a trim 112 of the rear door 100, and description is given below on this example. Needless to say, the shade device 10 is not limited to this example and is applicable for the purpose of shielding various windows. For example, the shade device 10 is also applicable to side windows and rear windows disposed in the parts other than doors as well as windows of vehicles other than cars.

Schematically, the shade device 10 is capable of extending and housing a shade 20 through an opening 46 of a housing member 40 and has a configuration in which a lid body 50 is disposed so as to open/close the opening 46. The shade device 10 is configured to hold the lid body 50 through a position change between an opened position and a closed position by an extending/housing movement of the shade 20 and a rotational biasing force of a spring member 70.

The shade device 10 includes the shade 20, a stay 30, the housing member 40, the lid body 50 and the spring member 70.

The shade 20 is a sheet-like member formed by, for example, cutting and sewing a material such as mesh-like fabric or resin sheet in accordance with the shape and size of the window 110 of a target car. The shade 20 may be formed of a fabric material capable of shading the light entering through the window 110 of the car.

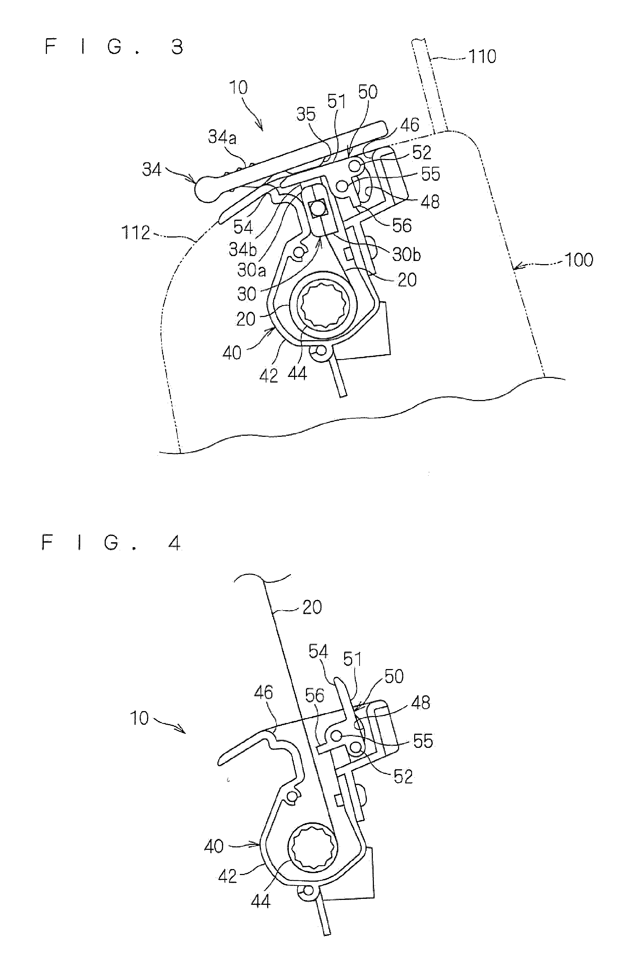

The shade 20 is mounted to the housing member 40 so as to be extended and housed. More specifically, the housing member 40 includes a main body 42 and a wind-up shaft portion 44 that is rotatably mounted to the main body 42 and is disposed in a state of being rotationally biased by a biasing member (not shown) such as a coil spring. Here, the main body 42 is a housing in which the opening 46 is formed and the wind-up shaft portion 44 is disposed therein (see FIG. 3 and FIG. 4).

The shade 20 has one end secured to the wind-up shaft portion 44 and is disposed in the housing member 40 in the state of being biased (wound up and biased) toward the wind-up direction. That is, the biasing force of the windup-up shaft portion 44 by the biasing member (not shown) acts as the wind-up force of the housing member 40 for the shade 20. The shade 20 is disposed so as to keep the housed state of being wound up in the main body 42 by the wind-up force of the housing member 40 in a state in which an external force is not exerted in the extending direction (see FIG. 1 and FIG. 3).

The stay 30 is attached to the extension-side edge of the shade 20. The stay 30 is formed into a long rod-shape having a dimension corresponding to a width dimension of the extension-side edge of the shade 20. Here, the stay 30 is configured to be disposed in the main body 42 of the housing member 40 in the housed state of the shade 20. Then, the shade 20 is extended/housed upon the stay 30 being moved in the extending/housing direction with respect to the housing member 40.

Coupled to the stay 30 is a handle member 34 for extending/housing the shade 20. The handle member 34 includes an operation portion 34a and a coupling portion 34b and has a configuration in which the coupling portion 34b is coupled to a middle portion of the stay 30 in the longitudinal direction (in this case, in a rotatable manner about an axis along the longitudinal direction of the stay 30). In the state in which the shade 20 is housed, the operation portion 34a of the handle member 34 is disposed outside the main body 42 and the coupling portion 34 thereof is disposed inside the main body 42 together with the stay 30. It suffices that the handle member 34 is formed so as to be supported by a part of a vehicle (for example, is formed into a shape that can be hooked to a support portion provided in the ceiling part of a vehicle) in the state in which the shade 20 is extended.

The shade 20 is configured so as to be extended/housed through the opening 46 from/in the main body 42 of the housing member 40 by the operation of extending/housing for the handle member 34. Note that the opening 46 is formed to have a width dimension larger than the width dimension of the shade 20 and a size for allowing the stay 30 to pass therethrough.

The housing member 40 is disposed in the trim 112 of the rear door 100 so as to extend and house the shade 20 along the window 110 (along the traveling direction of the vehicle), so that the opening 46 is open toward the ceiling side of the vehicle (see FIG. 1 and FIG. 3).

The lid body 50 is disposed in the housing member 40 so as to open/close the opening 46 and is configured so as to rotate about the rotation axis between the opened position (see FIG. 4) and the closed position (see FIG. 3) along with the extending/housing movement of the shade 20. More specifically, the lid body 50 has a shaft portion 55 whose center axis is the rotation axis, and is formed into a shape for capable of shielding the opening 46 partially or entirely in the closed position. The lid body 50 is configured so as to rotate about the rotation axis upon the shaft portion 55 being supported by both ends of the main body 42 of the housing member 40.

The lid body 50 is configured such that an outer surface portion 51 facing the inside of the room (ceiling side) in the closed position is disposed along the periphery of the opening 46 (see FIG. 1 and FIG. 3). Further, the lid body 50 is configured so as to open the opening 46 in the opened position such that the shade 20 (and the stay 30) can be extended and housed.

Further, a notch 59 in which the coupling portion 34b of the handle member 34 can be disposed is formed in the lid body 50 (in this case, first abutment portion 54 described below) in the closed position (see FIG. 2). That is, in the state in which the shade 20 is housed, the coupling portion 34b of the handle member 34 is disposed in the main body 42 of the housing member 40 through the notch 59 of the lid body 50.

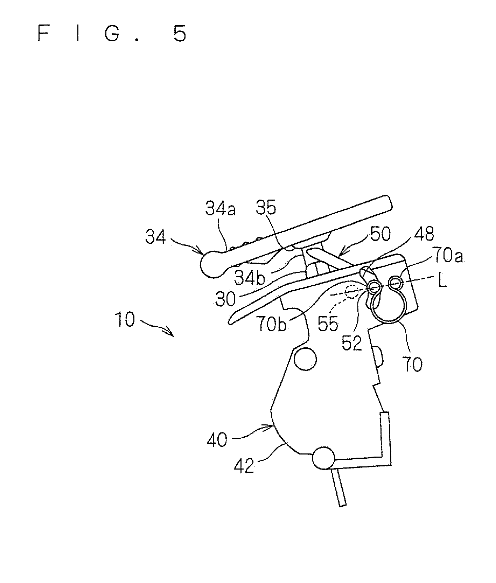

The lid body 50 includes a rocking portion 52 formed in a part thereof around the rotation axis of the shaft portion 55 (see FIG. 3 and FIG. 4). The rocking portion 52 is formed into an approximately cylindrical shape in which the rocking portion 52 projects from the both ends of the lid body 50 along a longitudinal direction. Guide portions 48 that guide the rocking portion 52 are formed in the housing member 40 (see FIG. 5). More specifically, the guide portions 48 are formed, in both ends of the main body 42 of the housing member 40, into a groove shape having an approximately arc shape about the rotation axis of the shaft portion 55 of the lid body 50. Here, the guide portion 48 is formed into a groove shape having a width dimension slightly larger than the rocking portion 52. The guiding range (circumferential dimension) of the rocking portion 52 by the guide portion 48 is set to the range in which the rocking portion 52 moves about the rotation axis when the lid body 50 changes its position between the closed position and the opened position.

The spring member 70 is configured so as to bias the lid body 50 in a rotating direction. More specifically, one end 70a of the spring member 70 is coupled to the main body 42 of the housing member 40 and the other end 70b thereof is coupled to the rocking portion 52 in the state in which a biasing force is exerted in the approaching/departing direction (in this case, departing direction) of the one end 70a and the other end 70b (see FIG. 5). That is, the spring member 70 is configured so as to change a direction of the biasing force when the other end 70b coupled to the rocking portion 52 is moved about the rotation axis of the lid body 50 along with the rotary movement of the lid body 50 and the positional relationship between the one end 70a and the other end 70b changes.

Here, the spring member 70 is disposed outside the side end of the main body 42 of the housing member 40. More specifically, the one end 70a of the spring member 70 is coupled at the position (at which, for example, a projection for coupling is preferably formed) of the side end of the main body 42 at which the guide portion 48 (in this case, approximately middle portion) is sandwiched between the shaft portion 55 of the lid body 50 and itself in the direction perpendicular to the longitudinal direction thereof. In other words, the one end 70a is disposed such that the middle portion of the guide portion 48 is located on a line L connecting the rotation axis of the shaft portion 55 of the lid body 50 and the coupling position of the one end 70a of the spring member 70. Meanwhile, the other end 70b is coupled to the rocking portion 52 that projects outside the guide portion 48 formed in the side end of the main body 42 through the guide portion 48.

With the above-mentioned configuration, the other end 70b of the spring member 70 approaches the one end 70a most in the state in which the rocking portion 52 (center axis) is positioned on the line L (see FIG. 5), and gradually goes away as the rocking portion 52 moves toward the both ends of the guide portion 48 from the former position (along with a position change of the lid body 50 between the opened position and closed position). The biasing force for causing the one end 70a and the other end 70b of the spring member 70 to depart from each other is exerted as the rotational biasing force against the lid body 50.

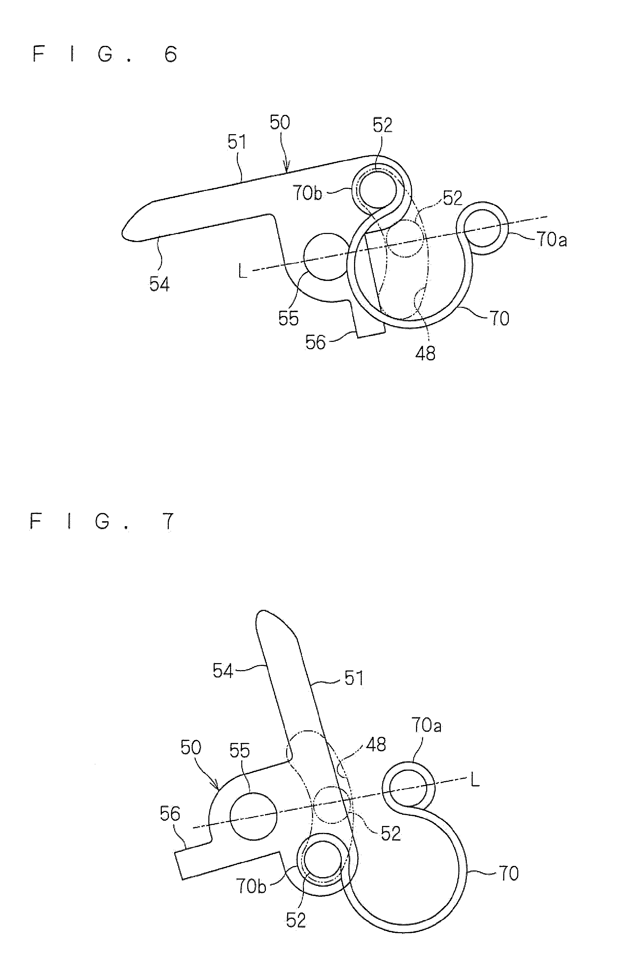

That is, the spring member 70 is configured to change the direction of the rotational biasing force exerted on the lid body 50 every time the other end 70b secured to the rocking portion 52 crosses the line L connecting the one end 70a and the rotation axis of the lid body 50 along with the rotary movement of the lid body 50. More specifically, when the rocking portion 52 crosses the line L toward the closing direction in position change of the lid body 50 from the opened position to the closed position, the spring member 70 is rotationally biased with the lid body 50 being directed to the closing direction (see FIG. 6). Meanwhile, when the rocking portion 52 crosses the line L toward the opening direction in the position change of the lid body 50 from the closed position to the opened position, the spring member 70 is rotationally biased with the lid body 50 being directed to the opening direction (see FIG. 7).

The spring member 70 is disposed so as to exert the rotational biasing force in the opening direction on the lid body 50 in the state in which the lid body 50 is opened and exert the rotational biasing force in the closing direction on the lid body 50 in the state in which the lid body 50 is closed. That is, the spring member 70 is configured to continuously exert the rotational biasing force in the opening direction or closing direction on the lid body 50 from the position at which the other end 70b (rocking portion 52) crosses the line L and be rotationally biased in the opening direction or closing direction even in the state in which the position of the lid body 50 is changed to the opened position or closed position (see FIG. 6 and FIG. 7).

Here, a toggle spring is used as the spring member 70. Needless to say, the spring member 70 is not limited to a toggle spring, which may be one capable of biasing the portion between the one end and the other end in the departing direction. For example, a coil spring, leaf spring or the like can be used as the spring member 70.

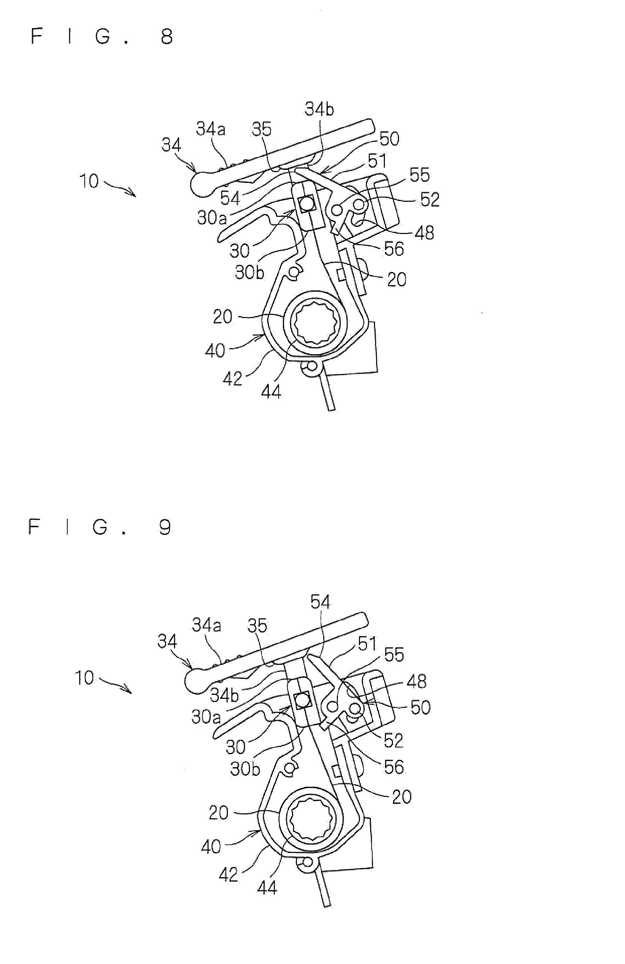

As described above, the lid body 50 rotationally biased by the spring member 70 includes the first abutment portion 54 that can abut against a distal end 30a of the stay 30 when the shade 20 is extended and a second abutment portion 56 that can abut against a pivotal end 30b of the stay 30 when the shade 20 is housed (see FIG. 8 and FIG. 9). That is, the first abutment portion 54 is formed to be disposed on a movement path in the extending direction of the stay 30 disposed in the main body 42 of the housing member 40 in the state in which the lid body 50 is closed. Meanwhile, the second abutment portion 56 is formed to be disposed on a movement path in the housing direction of the stay 30 in the state in which the lid body 50 is opened.

Here, the first abutment portion 54 forms a part of the outer surface portion 51 that blocks the opening 46. Needless to say, the first abutment portion 54 may be formed in the portion other than the outer surface portion 51 of the lid body 50.

Here, the first abutment portion 54 is disposed to be located on the movement path of the stay 30 until the rotational biasing force in the opening direction is exerted on the lid body 50 by the spring member 70. Meanwhile, the second abutment portion 56 is disposed to be located on the movement path of the stay 30 until the rotational biasing force in the closing direction is exerted on the lid body 50 by the spring member 70. That is, a configuration is made such that the position of the lid body 50 is changed by the pushing force by the movement of the stay 30 in the extending/housing direction until the rotational biasing force for changing the position between the opened position and the closed position is exerted on the lid body 50 by the spring member 70.

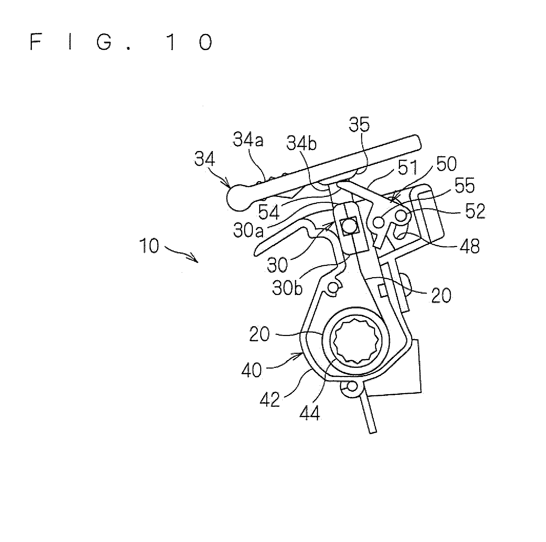

The handle member 34 (abutment member) described above is configured so as to abut against the lid body 50 toward the closing direction by the wind-up force of the housing member 40 when the shade 20 is housed (see FIG. 10). More specifically, the handle member 34 as an abutment member is configured so as to abut against the first abutment portion 54 of the lid body 50 in the course of the position change from an opened position to a closed position. The location at which the handle member 34 abuts against the first abutment portion 54 is the location at which the rocking portion 52 (the other end 70b of the spring member 70) crosses the line L in the closing direction in the course of the position change of the lid body 50 from an opened position to a closed position. Note that the handle member 34 as an abutment member may be configured such that a pressure portion 35 described below abuts against the first abutment portion 54.

The handle member 34 includes the pressure portion 35 capable of pressing the lid body 50 in the closed position toward the closing direction by the wind-up force of the housing member 40 (see FIG. 3). The pressure portion 35 is formed at the location of the housing-side portion of the handle member 34 in the state in which the shade 20 is housed, at which the pressure portion 35 is capable of abutting against the outer surface portion 51 of the closed lid body 50 on the first abutment portion 54 side.

### <2. Movement of shade device>

Next, the movement of the shade device 10 having the above-mentioned configuration is described.

First, the movement of drawing the shade 20 is described (movement in order of FIG. 3, FIG. 8 and FIG. 4). Note that the shade device 10 is in the state where the shade 20 is housed (see FIG. 3) as the initial state.

A user manually operates the handle member 34 in the extending direction of the shade 20, and then, the stay 30 is moved in the extending direction and the distal end 30a thereof abuts against the first abutment portion 54 of the lid body 50. Then, the stay 30 is moved in the extending direction from the location at which the distal end 30a of the stay 30 abuts against the first abutment portion 54, and accordingly, the first abutment portion 54 is gradually pushed up by the stay 30, whereby the lid body 50 changes the position in the opening direction (see FIG. 8). In addition, along with the position change of the lid body 50, the position of the spring member 70 changes, whereby the direction of the biasing force for causing the one end 70a and the other end 70b thereof to depart from each other changes as well. In this state, the rotational biasing force exerted on the lid body 50 by the spring member 70 is exerted toward the closing direction (see FIG. 6).

The first abutment portion 54 is further pushed up by the stay 30, and the rocking portion 52 (the other end 70b of the spring member 70) crosses the line L connecting the rotation axis of the lid body 50 and the one end 70a of the spring member 70 toward the opening direction, whereby the rotational biasing force of the spring member 70 on the lid body 50 changes its direction and is exerted in the opening direction (see FIG. 7). Note that the rotational biasing force is not exerted on the lid body 50 in the state in which the rocking portion 52 is located on the line L, that is, in the state in which the direction of the force of the spring member 70 approximately coincides with the line L (see FIG. 5).

The lid body 50 changes a position in the opening direction from the location at which the rocking portion 52 crosses the line L by the rotational biasing force of the spring member 70. Needless to say, the lid body 50 may be configured, while the first abutment portion 54 is located on the movement path of the stay 30 moved in the extending direction, to change a position in the opening direction by the force for pushing up the stay 30 in addition to the rotational biasing force of the spring member 70 toward the opening direction.

After that, the position of the lid body 50 is changed to the opened position by the rotational biasing force of the spring member 70 toward the opening direction (see FIG. 4). In this state, the lid body 50 is kept in the state in which it does not interfere with the shade 20.

The user extends the shade 20 up to the extended state by operating the handle member 34 in the extending direction even after a position change of the lid body 50. When the shade 20 is extended up to the extended state, the user may keep the extended state by supporting the handle member 34 by a vehicle body (such as interior).

Through the procedure described above, the shade device 10 is brought into the state in which the shade 20 is extended. In this extended state, the lid body 50 is stably held in the opened position by the rotational biasing force of the spring member 70 in the opening direction (see FIG. 4 and FIG. 7).

Then, the movement of housing the shade 20 is described (movement in order of FIG. 4, FIG. 9, FIG. 10 and FIG. 3). Note that the shade device 10 is in the state of FIG. 4 as an initial state.

First, a user detaches the handle member 34 supported by the vehicle body, and performs manual operation toward the housing direction. Then, along with the operation of the handle member 34 by the user, the shade 20 is being housed in the housing member 40 by the wind-up force of the housing member 40, and the stay 30 and the handle member 34 are being moved in the housing direction.

The stay 30 is moved in the housing direction from the location at which the pivotal end 30b of the stay 30 abuts against the second abutment portion 56 of the lid body 50, and then the second abutment portion 56 is gradually pushed down by the stay 30, whereby the position of the lid body 50 is changed in the closing direction (see FIG. 9). Further, along with a position change of the lid body 50, the position of the spring member 70 changes, and the direction of the biasing force for causing the one end 70a and the other end 70 thereof to depart from each other changes as well. In this state, the rotational biasing force exerted on the lid body 50 by the spring member 70 is exerted toward the opening direction (see FIG. 7).

The second abutment portion 56 is further pushed down by the stay 30, and then the rocking portion 52 (the other end 70b of the spring member 70) crosses the line L connecting the rotation axis of the lid body 50 and the one end 70a of the spring member 70 toward the closing direction, whereby the rotational biasing force of the spring member 70 on the lid body 50 changes its direction and is exerted in the closing direction (see FIG. 6).

In this movement of housing the shade 20, the housing-side portion of the handle member 34 abuts against the outer surface portion 51 of the lid body 50 toward the closing direction at the location at which the rocking portion 52 crosses the line L (in this case, location immediately after the rocking portion 52 crosses the line L), that is, at the location with a minute rotational biasing force of the spring member 70 on the lid body 50 in the closing direction (see FIG. 10). The handle member 34 pushes the lid body 50 toward the closing direction by the wind-up force of the housing member 40 from the above-mentioned abutment position. That is, the lid body 50 changes a position thereof from the location at which the rocking portion 52 crosses the line L by the rotational biasing force of the spring member 70 and the pushing force of the handle member 34.

After that, the position of the lid body 50 is changed to the closed position by the rotational biasing force of the spring member 70 in the closing direction (see FIG. 3).

Through the procedure described above, the shade device 10 is brought into the state in which the shade 20 is housed. In this housed state, the pressure portion 35 of the handle member 34 pulled toward the housing direction by the wind-up force of the housing member 40 abuts against the outer surface portion 51 of the lid body 50 in the closed position and is then kept in the pressed state. The lid body 50 is stably kept in the closed position by the rotational biasing force of the spring member 70 in the closing direction (see FIG. 3 and FIG. 6).

According to the shade device 10 having the above-mentioned configuration, the spring member 70 is disposed such that the direction of the biasing force in the direction in which the one end 70a and the other end 70b thereof are caused to depart from each other is changed along with the rotary movement of the lid body 50 caused by the movement of extending/housing movement of the shade 20 and is configured so as to rotationally bias the lid body 50 in the opening direction in the opened position and rotationally bias the lid body 50 in the closing direction in the closed position. That is, the lid body 50 is kept in the opened position or closed position by the rotational biasing force of the spring member 70 that is exerted on the lid body 50. Therefore, the lid body 50 disposed in the housing member 40 can be held in the opened position or closed position more stably.

Further, it is possible to prevent the lid body 50 from interfering with the shade 20, which enables to extend/house the shade 20 in a stable manner. Further, the lid body 50 can be opened/closed smoothly by the rotational biasing force of the spring member 70.

The direction of the rotational biasing force exerted on the lid body 50 is changed every time the other end 70b of the spring member 70 secured to the rocking portion 52 crosses the line L connecting the one end 70a of the spring member 70 and the rotation axis of the shaft portion 55 of the lid body 50. That is, the lid body 50 is rotated along with the extending/housing movement of the shade 20, and is rotationally biased toward the opening direction or closing direction from the location at which the rotational biasing force of the spring member 70 is changed to the state in which the position is changed to the opened position or closed position. This allows the lid body 50 to change its position to the opened position or closed position more reliably. When the shade 20 is extended, the shade 20 can be extended stably and smoothly without the shade 20 interfering with the lid body 50.

The lid body 50 starts to rotate upon the stay 30 directly abutting against the first abutment portion 54 and the second abutment portion 56 of the lid body 50 when the shade 20 is extended/housed, which stabilizes the initial movement of the lid body 50.

When the shade 20 is extended, the first abutment portion 54 remains on the movement path of the stay 30 until the spring member 70 exerts the rotational biasing force on the lid body 50 in the opening direction. Meanwhile, when the shade 20 is housed, the second abutment portion 56 is configured to be located on the movement path of the stay 30 until the spring member 70 exerts the rotational biasing force on the lid body 50 in the closing direction. Accordingly, the lid body 50 can be opened/closed more reliably.

The sliding movement of the rocking portion 52 is regulated by the guide portions 48, whereby the rotational biasing force of the spring member 70 can be exerted stably in the rotation direction of the lid body 50. This enables to open/close the lid body 50 more reliably.

The handle member 34 as an abutment member abuts against the lid body 50 toward the closing direction when the shade 20 is housed, which allows the lid body 50 to change its position to the closed position more reliably.

The pressure portion 35 of the handle member 34 abuts against the lid body 50 toward the closing direction in the state in which the lid body 50 is closed, which prevents rattling of the lid body 50 in the closed position more reliably. In addition, the handle member 34 for extending/housing the shade 20 is caused to abut against the lid body 50 by the wind-up force of the housing member 40, leading to an advantage that a dedicated member is not required separately for preventing rattling of the lid body 50 in the closed position.

While the shade device 10 has been shown and described in detail, the foregoing description is in all aspects illustrative, and the present invention is not limited thereto. That is, numerous modifications and variations can be devised in the described aspects without departing from the scope of the invention.

### Description of Symbols

- 10: shade device
- 20: shade
- 30: stay
- 34: handle member
- 35: pressure portion
- 40: housing member
- 46: opening
- 48: guide portion
- 50: lid body
- 52: rocking portion
- 55: shaft portion
- 70: spring member
- 70a: one end
- 70b: the other end

## Claims

1. A shade device for shielding a window of a vehicle, comprising:
a shade;
a housing member to which said shade is mounted so as to be extended/housed through an opening;
a lid body disposed in said housing member so as to open/close said opening and configured to rotate about a rotation axis between an opened position and a closed position along with an extending/housing movement of said shade; and
a spring member configured to bias said lid body in a rotation direction,
wherein said spring member is disposed so as to change a direction of a biasing force along with a rotary movement of said lid body so that a rotational biasing force in an opening direction is exerted on said lid body in a state in which said lid body is opened and that a rotational biasing force in a closing direction is exerted on said lid body in a state in which said lid body is closed.

2. The shade device according to claim 1, wherein:
said lid body includes a rocking portion formed in a part thereof around the rotation axis; and
said spring member has one end coupled to said housing member and the other end coupled to said rocking portion in a state in which the biasing force is exerted in an approaching/departing direction of said one end and said other end, and is configured to change the direction of the rotational biasing force exerted on said lid body every time said other end secured to said rocking portion crosses a line connecting said one end and the rotation axis of said lid body along with the rotary movement of said lid body.

3. The shade device according to claim 1, further comprising a stay attached to an extension-side edge of said shade,
wherein said lid body includes a first abutment portion configured to abut against a distal end of said stay when said shade is extended and a second abutment portion configured to abut against a pivotal end of said stay when said shade is housed.

4. The shade device according to claim 3, wherein:
said first abutment portion is disposed so as to be disposed on a movement path of said stay until the rotational biasing force of said spring member in the opening direction is exerted on said lid body; and
said second abutment portion is disposed so as to be disposed on the movement path of said stay until the rotational biasing force of said spring member in the closing direction is exerted on said lid body.

5. The shade device according to claim 2, wherein said housing member includes a guide portion guiding said rocking portion formed in a part of said lid body around the rotation axis.

6. The shade device according to claim 3, further comprising an abutment member coupled to said stay attached to the extension-side edge of said shade and configured to abut against said lid body toward the closing direction by the biasing force for housing the shade by said housing member.

7. The shade device according to claim 6, wherein said abutment member includes a pressure portion configured to press said lid body in the closed position toward the closing direction by the biasing force for housing the shade by said housing member.
